# EUROPEAN PATENT SPECIFICATION

(11) **EP 0 794 190 B1**
(45) Date of publication and mention of the grant of the patent: **24.04.2002**
(21) Application number: 97103418.6
(22) Date of filing: 27.02.1997
(51) Int. Cl.: C07F 9/53

(54) **Method of producing alkenylphosphine oxide or bis (alkenylphosphine oxide)**
Verfahren zur Herstellung von Alkenylphosphinoxiden oder bis(Alkenylphosphinoxiden)
Procédé de préparation d'oxydes d'alcénylphosphines ou d'oxydes de bis(alcénylphosphines)

(30) Priority: 07.03.1996 JP 5006896; 07.03.1996 JP 5008096
(43) Date of publication of application: 10.09.1997
(73) Proprietor: National Institute of Advanced Industrial Science and Technology, Tokyo 100-8901 (JP)
(72) Inventor: Tanaka, Masato, Tsukuba-shi, Ibaraki-ken (JP); Han, Li-Biao, Tsukuba-shi, Ibaraki-ken (JP)
(74) Representative: Luderschmidt, Schüler & Partner GbR

(56) References cited:
- DE-B- 1 241 995
- US-A- 3 458 581
- SYNTHESIS, vol. 86, no. 8, 1 August 1986, page 691/692 XP002006946 XU Y ET AL: "PALLADIUM-CATALYSED SYNTHESIS OF ALKENYLDIPHENYL- AND ALKENYLBENZYLPHENYLPHOSPHINE OXIDES"
- ORGANOMETALLICS (ORGND7,02767333);96; VOL.15 (15); PP.3259-3261, NATIONAL INSTITUTE OF MATERIALS AND CHEMICAL RESEARCH;IBARAKI; 305; JAPAN (JP), XP000677651 HAN L B ET AL: "Oxidative Addition of HP(O)Ph2 to Platinum(0) and Palladium(0) Complexes and Palladium-Catalyzed Regio- and Stereoselective Hydrophosphinylation of Alkynes"

## Description

This invention relates to a method of producing an alkenylphosphine oxide compound.

An alkenylphosphine oxide compound is easily reduced to a tertiary phosphine which is widely utilized as a ligand of various catalysts. Alkenylphosphine oxide compounds easily react with nucleophiles and various radical species and, further, can be utilized for Horner-Witting reaction. Thus, alkenylphosphine oxide compounds now play important roles in synthesis of fine chemicals.

One known method for the production of an alkenylphosphine oxide includes reacting an alkenyl Grignard reagent with a halogenated phosphorus compound. This method unavoidably produces a magnesium salt (See, for instance, US-A-358581). Also known is a method in which a secondary phosphine oxide is reacted with an alkenyl halide (See, for instance, Synthesis, 86, 1986, pp. 691-692). This method produces hydrogen halide which should be trapped as a salt. In DE-B-1241995 a diphenylvinylphosphine oxide is prepared by reacting chlorodiphenylphosphine with ethanol to obtain diphenylethoxyphosphine, further reacting said diphenylethoxyphosphine with 1,2-dibromoethane, and the product with a tertiary amine.

The present invention has been made in view of the above problems of the conventional methods.

In accordance with one aspect of the present invention there is provided a method of producing an alkenylphosphine oxide represented by the following formula (I) and/or (VIII): 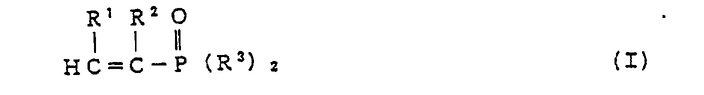 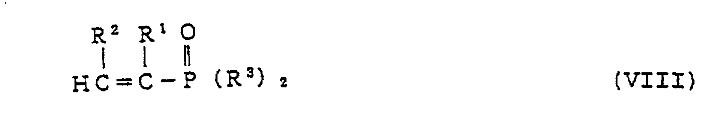 wherein R¹ and R² are independently selected from a hydrogen atom, an alkyl group, a cycloalkyl group, an aryl group, a heteroaryl group, an aralkyl group, an alkenyl group, an alkoxy group, an aryloxy group and a silyl group and R³ represents an alkyl group, a cycloalkyl group, aralkyl group or an aryl group, said method being characterized in that an acetylene compound represented by the following formula (II) :

R¹C ≡ CR² (II)

wherein R¹ and R² are as defined above, is treated with a secondary phosphine oxide represented by the formula (III): 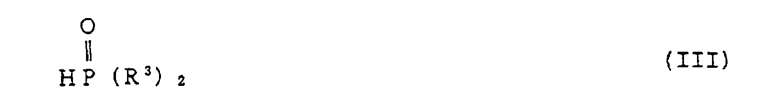 wherein R³ is as defined above, in the presence of a palladium complex catalyst. The groups represented by the symbols R¹, R² and R³ may contain one or more inert substituents.

In another aspect, the present invention provides a method of producing a bis(alkenylphosphine oxide) represented by the following formula (V) and/or (VI): 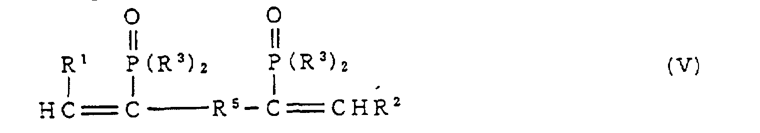 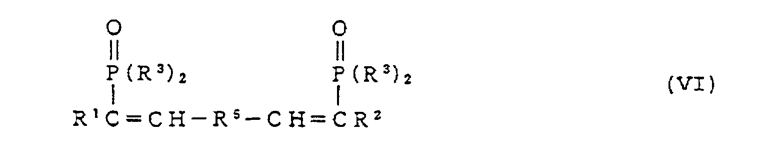 wherein R¹ and R² are independently selected from a hydrogen atom, an alkyl group, a cycloalkyl group, an aryl group, a heteroaryl group, an aralkyl group, an alkenyl group, an alkoxy group, an aryloxy group and a silyl group, R³ represents an alkyl group, a cycloalkyl group, aralkyl group or an aryl group and R⁵ represents a divalent group selected from an alkylene group, a cycloalkylene group, an arylene group, a heteroarylene group, an aralkylene group, alkenylene group, an alkylene dioxy group, an arylene dioxy group, an oxalkylene group and an oxalkylenearylene group, said method being characterized in that a diacetylene compound represented by the following formula (VII) :

R¹C ≡ C - R⁵ - C ≡ CR² (VII)

wherein R¹, R² and R⁵ are as defined above, is treated with a secondary phosphine oxide represented by the formula (III): 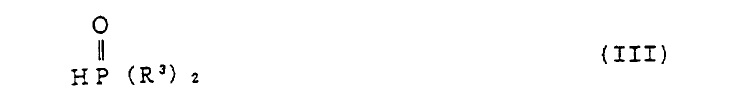 wherein R³ is as defined above, in the presence of a palladium complex catalyst. The groups represented by the symbol R¹, R², R³ and R⁵ may contain one or more inert substituents.

The present invention will now be described in detail below.

In the present invention, an acetylene compound represented by the above formula (II) or (VII) is treated with a secondary phosphine oxide represented by the above formula (III). Examples of the groups R¹ and R² in the formula (II) and (VII) include a hydrogen atom, a methyl group, a propyl group, a benzyl group, a phenyl group, a thienyl group, a 3-butenyl group, an ethoxy group, a phenoxy group and a trimethylsilyl group. Examples of the group R⁵ include a tetramethylene group, a phenylene group, a thienylene group, a ferrocenylene group and a phenylenedioxy group. Examples of the acetylene compounds include acetylene, butyne, octyne, phenylacetylene, trimethylsilylacetylene, ethynylthiophene, diethynylbenzene, nonane-1,8-diyne, hexynonitrile, 3-butyne-1-ol and cyclohexenylacetylene. Examples of the group R³ in the formula (III) include a methyl group, an ethyl group, a hexyl group, a cyclohexyl group, a phenyl group and a benzyl group.

The reaction of the acetylene compound of the formula (II) or (VII) with the secondary phosphine oxide of the formula (III) is carried out in the presence of a palladium complex catalyst, preferably a low atomic valent palladium complex catalyst. An example of suitable palladium complex catalysts is a zero-valent palladium complex having tertiary phosphines or tertiary phosphites as ligands. Also preferred is the use of a precursor complex which is converted in situ to a zero-valent palladium complex catalyst during the reaction of the acetylene compound. Furthermore, a palladium complex having no tertiary phosphine or tertiary phosphite ligands may be used, when added to the reaction system together with a tertiary phosphine or phosphite. In this case, a low atomic valent palladium complex having tertiary phosphine or tertiary phosphite ligands is formed in situ during the reaction of the acetylene compound.

Examples of tertiary phosphine or tertiary phosphite ligands include triphenylphosphine, diphenylmethylphosphine, phenyldimethylphosphine, trimethylphosphine, triethylphosphine, diphenylcyclohexylphosphine, phenyldicyclohexylphosphine, 1,4-bis(diphenylphosphino)butane, trimethylphosphite and triphenylphosphite.

Examples of palladium complexes having no tertiary phosphine or tertiary phosphite ligands and used together with a tertiary phosphine or phosphite include bis(benzylideneacetone)palladium and palladium acetate.

Examples of suitable palladium complex catalysts include dimethylbis(triphenylphosphine)palladium, dimethylbis(diphenylmethylphosphine)palladium, dimethylbis(triethylphosphine)palladium, ethylenebis(triphenylphosphine)palladium, and tetrakis(triphenylphosphine)-palladium. A product obtained by reducing a divalent palladium complex, such as dichlorobis(triphenylphosphine)-palladium, with a suitable reducing agent such as butyllithium may also be used as the palladium catalyst.

The palladium catalyst may be used in a so-called "catalytic amount" and, generally, in an amount of 20 mole % or less based on the amount of the acetylene compound.

When the above reaction is carried out in the presence of a phosphinic acid represented by the following formula (IV): 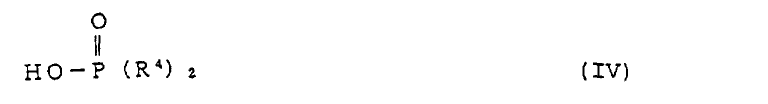 wherein R⁴ represents an alkyl group, a cycloalkyl group, an aralkyl group or an aryl group, the substitution position of the phosphine oxide radical -PO(R³) can be controlled.

The reaction of the acetylene compound with the secondary phosphine oxide is carried out with or without using a solvent. A hydrocarbon or ether solvent can be used. The amount of the acetylene compound is not specifically limited but is generally about 1 mole per mole of the secondary phophine oxide. The reaction temperature is generally from room temperature to about 200°C, preferably 50 to 150°C. The reaction is preferably performed in an inert gas atmosphere such as nitrogen, argon or methane. The alkenylphosphine oxide compound thus obtained can be isolated from the reaction mixture by any conventional method such as chromatography, distillation or recrystallization.

The following examples will further illustrate the present invention.

### Example 1

In 2 ml of benzene were dissolved 1 mmol of 4-octyne and 1 mmol of diphenylphosphine oxide. To this solution, 3 mol % of cis-PdMe₂(PPh₂Me)₂ (Me: methyl, Ph: phenyl) was added. The resulting mixture was then heated at 70°C for 36 hours in the atmosphere of nitrogen. The NMR analysis of the product revealed that 4-octenyldiphenylphosphine oxide was produced. The product was isolated by liquid chromatography with in 81 % yield.

### Example 2

Example 1 was repeated in the same manner as described except that diphenylacetylene was used in place of 4-octyne and that the reaction was carried out for 12 hours. (1,2-Diphenylethenyl)diphenylphosphine oxide was obtained in 94 % yield.

### Example 3

Example 1 was repeated in the same manner as described except that acetylene gas was used in place of 4-octyne, that cis-PdMe₂(PPhMe₂)₂ was used in place of cis-PdMe₂(PPh₂Me)₂ and that the reaction was carried out for 5 hours. Vinyldiphenylphosphine oxide was obtained in 54 % yield.

### Example 4

In 2 ml of benzene were dissolved 1 mmol of 1-octyne and 1 mmol of diphenylphosphine oxide. To this solution, 5 mol % of Pd(PPh₃)₄ was added. The resulting mixture was then heated at 35°C for 20 hours in the atmosphere of nitrogen. The NMR analysis of the product revealed that 1-octen-1-yldiphenylphosphine oxide and 1-octen-2-yldiphenylphosphine oxide were produced in a molar ratio of 96:4. The total yield was 90 %.

### Example 5

In 2 ml of benzene were dissolved 1 mmol of 1-octyne and 1 mmol of diphenylphosphine oxide. To this solution, 0.04 mmol of diphenylphosphinic acid and 3 mol % of cis-PdMe₂(PPhMe₂)₂ were added. The resulting mixture was then heated at 70°C for 4 hours in the atmosphere of nitrogen. The NMR analysis of the product revealed that 1-octen-2-yldiphenylphosphine oxide and 1-octen-1-yldiphenylphosphine oxide were produced in a molar ratio of 95:5. The total yield was 100 %.

### Example 6

Example 5 was repeated in the same manner as described except that cis-PdMe₂(PPh₂Me)₂ was used in place of cis-PdMe₂(PPhMe₂)₂. 1-Octen-2-yldiphenylphosphine oxide and 1-octen-1-yldiphenylphosphine oxide were produced in a molar ratio of 84:16. The total yield was 100 %.

### Example 7

Example 6 was repeated in the same manner as described except that the reaction was carried out at 45°C. 1-Octen-2-yldiphenylphosphine oxide and 1-octen-1-yldiphenylphosphine oxide were produced in a molar ratio of 83:17. The total yield was 15 %.

### Example 8

Example 6 was repeated in the same manner as described except that tetrahydrofuran was used in place of benzene and that the reaction was carried out at 67°C. 1-Octen-2-yldiphenylphosphine oxide and 1-octen-1-yldiphenylphosphine oxide were produced in a molar ratio of 82:18. The total yield was 97 %.

### Example 9

Example 5 was repeated in the same manner as described except that Pd(PPh₃)₄ was used in place of cis-PdMe₂(PPhMe₂)₂ and that the reaction was performed for 3 hours. 1-Octen-2-yldiphenylphosphine oxide and 1-octen-1-yldiphenylphosphine oxide were produced in a molar ratio of 33:67. The total yield was 89 %.

### Example 10

Example 5 was repeated in the same manner as described except that a 1:1 mixture of cis- and trans-PdMe₂(PMe₃)₂ was used in place of cis-PdMe₂(PPhMe₂)₂ and that the reaction was performed for 5 hours. 1-Octen-2-yldiphenyl- phosphine oxide and 1-octen-1-yldiphenylphosphine oxide were produced in a molar ratio of 93:7. The total yield was 45 %.

### Example 11

Example 10 was repeated in the same manner as described except that the reaction was performed for 15 hours. 1-Octen-2-yldiphenylphosphine oxide and 1-octen-1-yldiphenylphosphine oxide were produced in a molar ratio of 93:7. The total yield was 100 %.

### Example 12

Example 5 was repeated in the same manner as described except that a 1:1 mixture of cis- and trans-PdMe₂(PEt₃)₂ (Et: ethyl) was used in place of cis-PdMe₂(PPhMe₂)₂ and that the reaction was performed for 5 hours. 1-Octen-2-yldiphenylphosphine oxide and 1-octen-1-yldiphenylphosphine oxide were produced in a molar ratio of 90:10. The total yield was 100 %.

### Examples 13-20

Example 5 was repeated in the same manner as described except that the acetylene compounds shown in Table 1 below were used in place of 1-octyne and that the reaction was performed for 3 hours. The products and their yields thereof are summarized in Table 1. In Example 16, cis-PdMe₂(PPh₂Me)₂ was used as the catalyst.

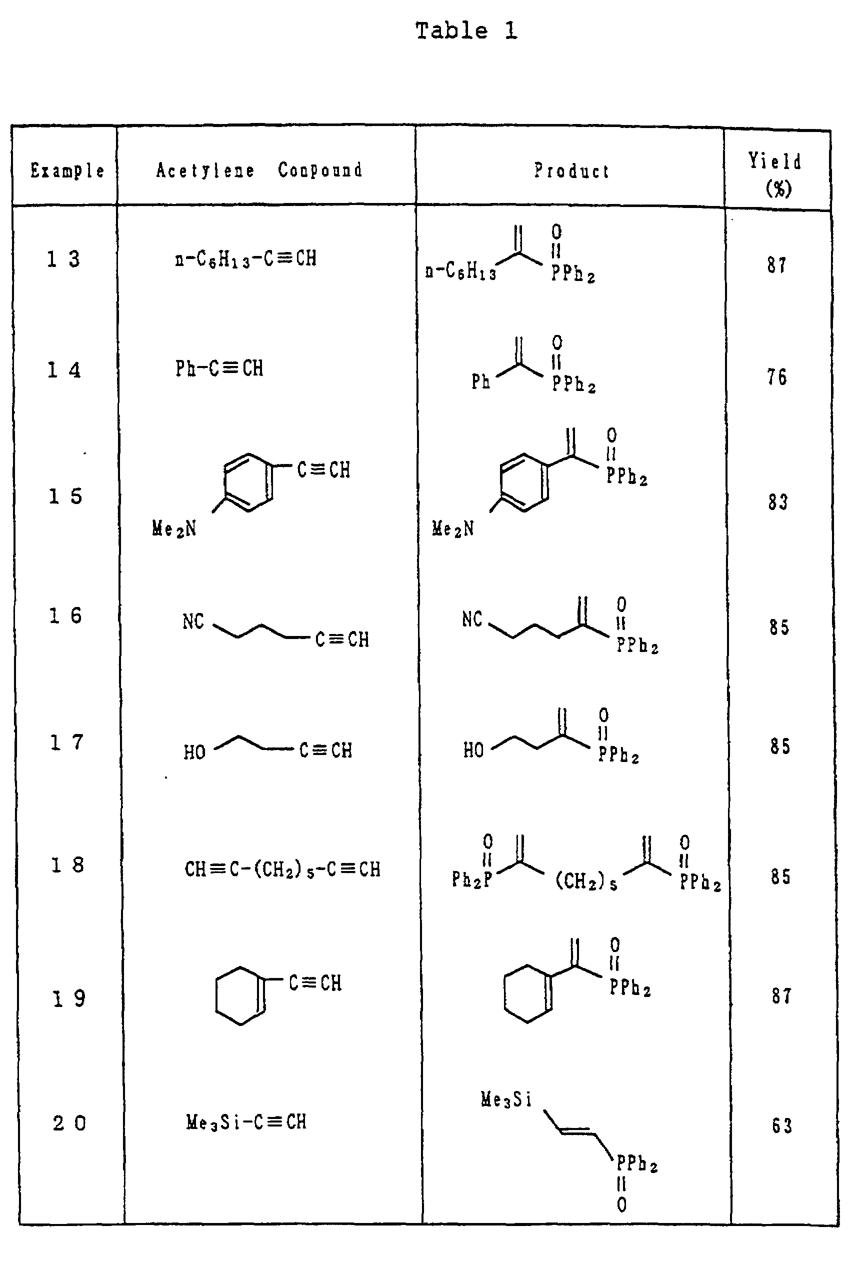

### Example 21

Example 8 was repeated in the same manner as described except that cis-PdMe₂(PPh₂Me)₂ was replaced by a mixture of PdCl₂(PPh₃)₂ with 2.1 mmol of methyllithium. 1-Octen-2-yldiphenylphosphine oxide was obtained in 72 % yield.

### Example 22

Example 5 was repeated in the same manner as described except that the amount of diphenylphosphinic acid was decreased to 0.01 mmol. 1-Octen-2-yldiphenylphosphine oxide and 1-octen-1-yldiphenylphosphine oxide were produced in a molar ratio of 70:30.

### Examples 23-28

Example 4 was repeated in the same manner as described except that the acetylene compounds shown in Table 2 below were used in place of 1-octyne. The products and their yields are summarized in Table 2.

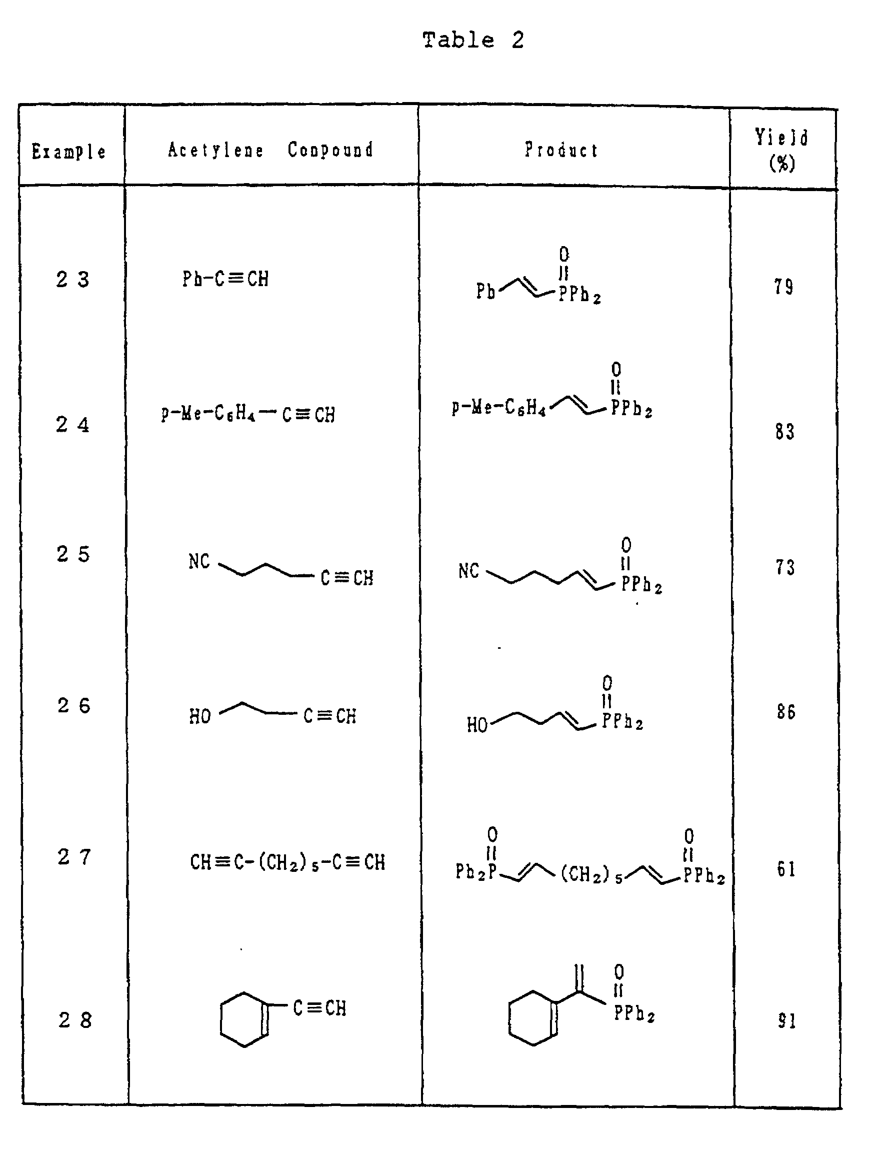

## Claims

1. A method of producing an alkenylphosphine oxide represented by the following formula (I) and/or (VIII) : 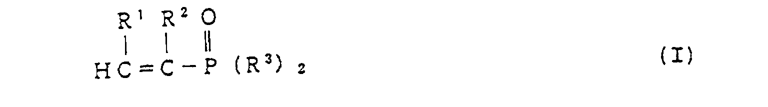 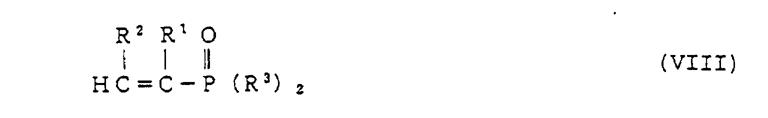 wherein R¹ and R² are independently selected from a hydrogen atom, an alkyl group, a cycloalkyl group, an aryl group, a heteroaryl group, an aralkyl group, an alkenyl group, an alkoxy group, an aryloxy group and a silyl group and R³ represents an alkyl group, a cycloalkyl group, aralkyl group or an aryl group, said method being **characterized in that** an acetylene compound represented by the following formula (II) :
R¹C ≡ CR² (II)
wherein R¹ and R² are as defined above, is treated with a secondary phosphine oxide represented by the formula (III): 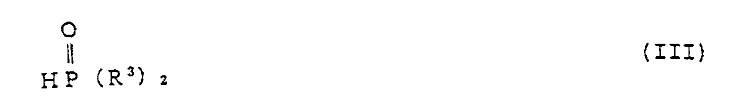 wherein R³ is as defined above, in the presence of a palladium complex catalyst.

2. A method as claimed in claim 1, wherein said reaction of said acetylene compound (II) with said secondary phosphine oxide (III) is performed in the presence of a phosphinic acid represented by the following formula (IV): 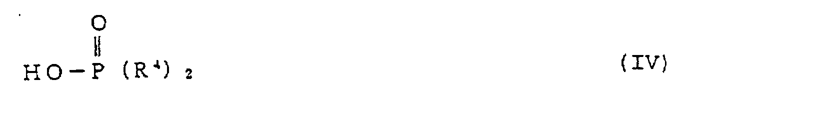 wherein R⁴ represents an alkyl group, a cycloalkyl group, an aralkyl group or an aryl group.

3. A method of producing a bis(alkenylphosphine oxide) represented by the following formula (V) and/or (VI): 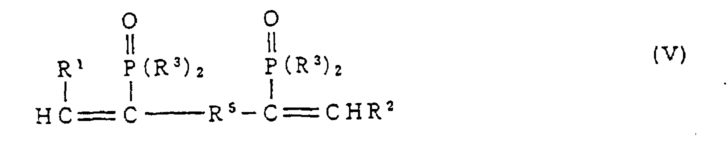 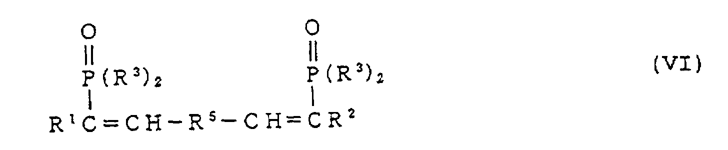 wherein R¹ and R² are independently selected from a hydrogen atom, an alkyl group, a cycloalkyl group, an aryl group, a heteroaryl group, an aralkyl group, an alkenyl group, an alkoxy group, an aryloxy group and a silyl group, R³ represents an alkyl group, a cycloalkyl group, aralkyl group or an aryl group and R⁵ represents a divalent group selected from an alkylene group, a cycloalkylene group, an arylene group, a heteroarylene group, an aralkylene group, alkenylene group, an alkylene dioxy group, an arylene dioxy group, an oxalkylene group and an oxalkylenearylene group, said method being **characterized in that** a diacetylene compound represented by the following formula (VII) :
R¹C ≡ C - R⁵ - C ≡ CR² (VII)
wherein R¹, R² and R⁵ are as defined above, is treated with a secondary phosphine oxide represented by the formula (III) : 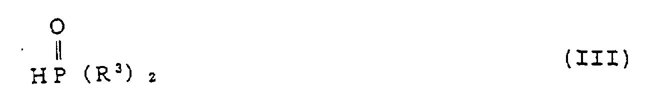 wherein R³ is as defined above, in the presence of a palladium complex catalyst.

4. A method as claimed in claim 3, wherein said reaction of said diacetylene compound (VII) with said secondary phosphine oxide (III) is performed in the presence of a phosphinic acid represented by the following formula (IV): 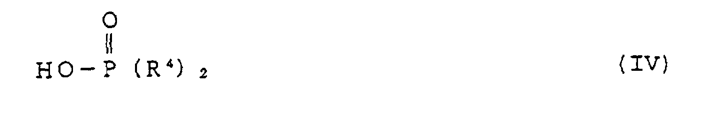 wherein R⁴ represents an alkyl group, a cycloalkyl group, an aralkyl group or an aryl group.

## Patentansprüche

1. Verfahren zur Herstellung eines Alkenylphosphinoxids der allgemeinen Formel (I) und/oder (VIII) 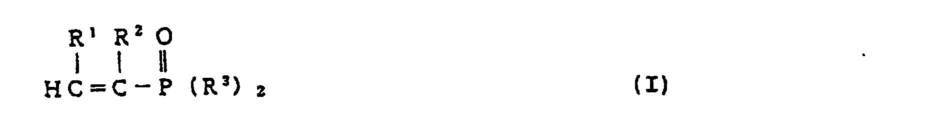 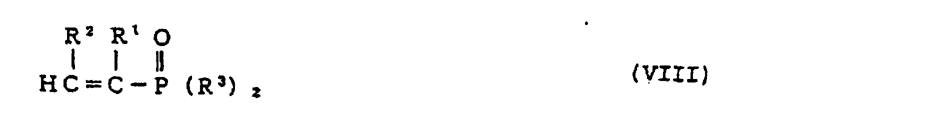 worin R¹ und R² unabhängig voneinander aus einem Wasserstoffatom, einer Alkylgruppe, Cycloalkylgruppe, Arylgruppe, Heteroarylgruppe, Aralkylgruppe, Alkenylgruppe, Alkoxygruppe, Aryloxygruppe und einer Silylgruppe ausgewählt sind, und R³ eine Alkylgruppe, Cycloalkylgruppe, Aralkylgruppe, oder Arylgruppe bedeutet, **dadurch gekennzeichnet, dass** eine Acetylenverbindung der Formel (II)
R¹C ≡ CR² (II)
worin R¹ und R² die zuvor genannten Bedeutungen besitzen, mit einem sekundären Phosphinoxid der Formel (III) 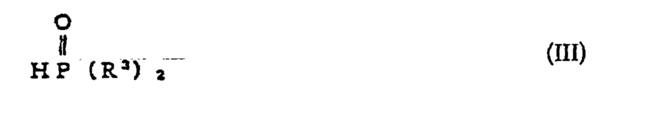 worin R³ die zuvor definierte Bedeutung besitzt, in Gegenwart eines Palladiumkomplex-Katalysators behandelt wird.

2. Verfahren gemäß Anspruch 1, bei dem die Umsetzung der Acetylenverbindung (II) mit dem sekundären Phosphinoxid (III) in Gegenwart einer Phosphinsäure der Formel (IV): 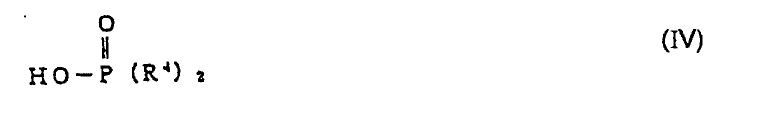 durchgeführt wird, worin R⁴ eine Alkylgruppe, Cycloalkylgruppe, Aralkylgruppe oder Arylgruppe bedeutet.

3. Verfahren zur Herstellung eines Bis(alkenylphosphinoxid)s der allgemeinen Formel (V) und/oder (VI) 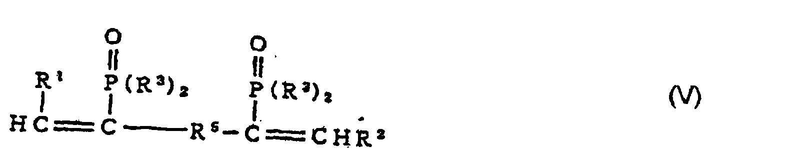 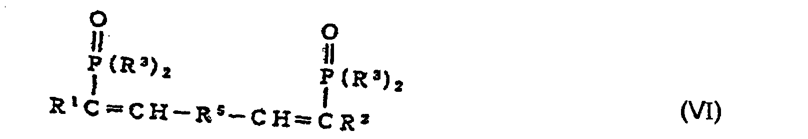 worin R¹ und R² unabhängig voneinander aus einem Wasserstoffatom, einer Alkylgruppe, Cycloalkylgruppe, Arylgruppe, Heteroarylgruppe, Aralkylgruppe, Alkylengruppe, Alkoxygruppe, Aryloxygruppe und einer Silylgruppe ausgewählt sind, R³ eine Alkylgruppe, Cycloalkylengruppe, Aralkylgruppe oder eine Arylgruppe, und R⁵ eine zweiwertige aus einer Alkenylgruppe, Cycloalkylengruppe, Arylengruppe, Heteroarylengruppe, Aralkylengruppe, Alkenylengruppe, Alkylendioxygruppe, Arylendioxygruppe, Oxalkylengruppe und Oxalkylenarylengruppe ausgewählte Gruppe bedeuten, **dadurch gekennzeichnet, dass** eine Diacetylenverbindung der Formel (VII)
R¹C ≡ C - R⁵ - C ≡ CR² (VII)
worin R¹, R² und R⁵ die zuvor genannten Bedeutungen besitzen, mit einem sekundären Phosphinoxid der Formel (III) 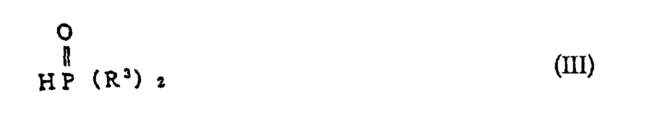 worin R³ die zuvor genannte Bedeutung besitzt, in Gegenwart eines Palladiumkomplexkatalysators behandelt wird.

4. Verfahren gemäß Anspruch 3, bei dem die Umsetzung der Diacetylenverbindung (VII) mit dem sekundären Phosphinoxid (III) in Gegenwart einer Phosphinsäure der Formel (IV) 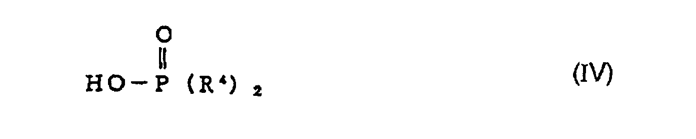 durchgeführt wird, worin R⁴ eine Alkylgruppe, Cycloalkylgruppe, Aralkylgruppe oder Arylgruppe bedeutet.

## Revendications

1. Procédé de préparation d'un oxyde d'alcénylphosphine représenté par les formules suivantes (I) et/ou (VIII): 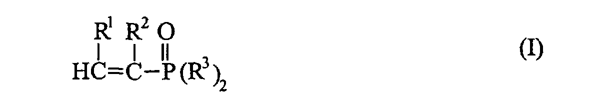 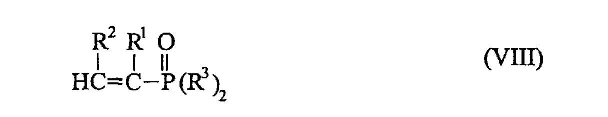 dans lesquelles R¹ et R² sont choisis indépendemment parmi un atome d'hydrogène, un groupe alkyle, un groupe cycloalkyle, un groupe aryle, un groupe hétéroaryle, un groupe aralkyle, un groupe alcénylique, un groupe alcoxy, un groupe aryloxy et un groupe silanylique, et R³ représente un groupe alkyle, un groupe cycloylkyle, un groupe aralkyle ou un groupe aryle, ledit procédé étant **caractérisé en ce qu'**un composé acétylénique représenté par la formule suivante (II):
R¹C≡CR² (II)
dans laquelle R¹ et R² ont la même signification comme en'haut, est traité avec un oxyde de phosphine secondaire représenté par la formule (III): 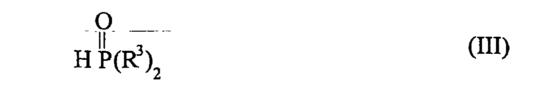 dans laquelle R³ a la même signification comme en'haut, en la présence d'un catalyseur de complexe de palladium.

2. Procédé d'après la revendication 1, dans lequel ladite réaction dudit composé acétylénique (II) avec ledit oxyde de phosphine secondaire est exécutée en présence d'un acide phosphinique représenté par la formule suivante (IV): 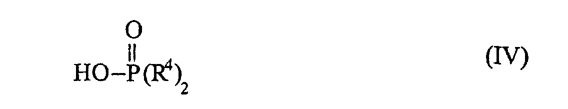 dans laquelle R⁴ représente un groupe alkyle, un groupe cycloalkyle, un groupe aralkyle ou un groupe aryle.

3. Procédé de préparation d'un oxyde de bis(alcénylphosphine) représenté par les formules suivantes (V) et/ou (VI): 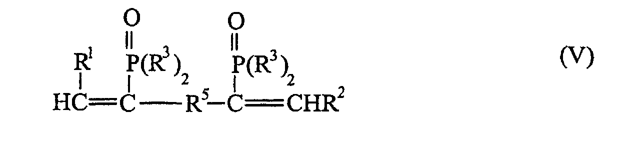 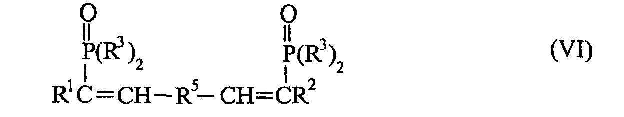 dans lesquelles R¹ et R² sont choisis indépendemment parmi un atome d'hydrogène, un groupe alkyle, un groupe cycloalkyle, un groupe aryle, un groupe hétéroaryle, un groupe aralkyle, un groupe alcénylique, un groupe alkoxy, un groupe aryloxy et un groupe silanylique, et R³ représente un groupe alkyle, un groupe cycloylkyle,un groupe aralkyle ou un groupe aryle, et R⁵ représente un groupe bivalent choisi parmi un groupe alkylène, un groupe cycloalkylène, un groupe arylène, un groupe hétéroarylène, un groupe aralkylène, un groupe alcénylène, un groupe alkylène-dioxy, un groupe arylène-dioxy, un groupe oxalkylène et un groupe oxalkylènearylène, ledit procédé étant **caractérisé en ce qu'**un composé diacétylénique représenté par la formule suivant (VII):
R¹C≡C-R⁵-C≡CR² (VII)
dans laquelle R¹, R² et R⁵ ont la même signification comme en'haut, est traité avec un oxyde de phosphine secondaire représenté par la formule (III): 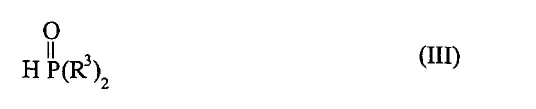 dans laquelle R³ a la même signification comme en'haut, en la présence d'un catalyseur de complexe de palladium.

4. Procédé d'après la revendication 3, dans lequel ladite réaction dudit composé diacétylénique (VII) avec ledit oxyde de phosphine secondaire est exécutée en présence d'un acide phosphinique représenté par la formule suivante (IV): 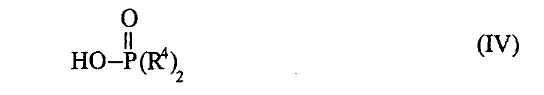 dans laquelle R⁴ représente un groupe alkyle, un groupe cycloalkyle, un groupe aralkyle ou un groupe aryle.
